# EUROPEAN PATENT SPECIFICATION

(11) **EP 4 141 342 B1**
(45) Date of publication and mention of the grant of the patent: **17.09.2025**
(21) Application number: 21792632.8
(22) Date of filing: 04.02.2021
(51) Int. Cl.: F24H 4/02, F24H 9/20, F24D 15/04, F24D 17/00, F24D 17/02, F24H 4/04, F24H 15/215, F24H 15/219, F24H 15/223, F24H 15/248, F24H 15/315, F24H 15/32, F24H 15/36, F24H 15/375

(54) **CONTROL METHOD FOR A HOT WATER UNIT**
VERFAHREN ZUR STEUERUNG EINER HEISSWASSEREINHEIT
PROCÉDÉ DE COMMANDE POUR UNE UNITÉ À EAU CHAUDE

(30) Priority: 23.04.2020 CN 202010328427
(43) Date of publication of application: 01.03.2023
(73) Proprietor: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: ZHANG, Baoku, Shandong 266101 (CN); HAN, Weitao, Shandong 266101 (CN); JIAO, Hua, Shandong 266101 (CN); HAN, Yefei, Shandong 266101 (CN); MAO, Shoubo, Shandong 266101 (CN)
(74) Representative: Guardian IP Consulting I/S
(86) International application number: PCT/CN2021/075215
(87) International publication number: WO 2021/212956

(56) References cited:
- WO-A1-2010/134153
- CN-A- 1 818 498
- CN-A- 101 424 451
- CN-A- 102 445 027
- CN-A- 104 633 925
- CN-A- 104 964 431
- CN-A- 105 466 034
- CN-A- 107 687 707
- CN-A- 107 687 707
- CN-A- 108 375 101
- CN-A- 111 609 552
- CN-A- 111 609 561
- US-B2- 6 601 773

## Description

### FIELD OF THE INVENTION

The present invention relates to a control method for a hot water unit.

### BACKGROUND OF THE INVENTION

Chinese patent publication No. CN108019938A discloses a household normal-pressure heat pump type water heater, which includes a heat preservation water tank, a heat exchanger and a heat pump system; the heat exchanger is provided with a refrigerant passage and a water flow passage exchanging heat with each other, the refrigerant passage is connected with the heat pump system to form a loop, and a water inlet hole of the heat preservation water tank communicates with an outlet of the water flow passage; port *a* of an electric three-way regulating valve communicates with a water outlet hole of the heat preservation water tank, port *b* of the electric three-way communicates with an inlet of the water flow passage through a water pump, and port c of the electric three-way communicates with a water inflow pipe; a water outflow pipe is also arranged between the water outlet hole of the heat preservation water tank and port *a* of the electric three-way regulating valve.

When the above existing water heater is in use, after the user uses hot water in the heat preservation water tank from the water outflow pipe, port b and port c of the electric three-way valve are conducted, and the water pump provides power for tap water supplied from the water inflow pipe to enter the water flow passage. The water in the water flow passage enters the heat preservation water tank after one-time heat exchange with the refrigerant passage. After the water is replenished, port *a* and port c of the electric three-way valve are conducted, and the water pump provides power for the water in the water outlet hole of the heat preservation water tank to enter the water flow passage, so that the water in the heat preservation water tank can be circularly heated, thus increasing water temperature in the heat preservation water tank.

In the above existing water heater, after replenishing water, it will take a period of time to heat the water in the heat preservation water tank to a required water temperature by means of circularly heating. However, the shortcoming of this kind of water heater is that the water temperature in the heat preservation water tank cannot satisfy user's requirements on use in the heating process, thus affecting the normal use by the user.

Chinese patent publication No. CN102445027A discloses a double-water tank hot water system of a heat-recovery air-cooling heat pump unit. The system comprises a control device, a refrigeration host machine, first and second electromagnetic three-way valves, first and second electromagnetic two-way valves, an operating water tank, a heat preservation water tank, first, second and third temperature sensors, a filter, first and second water pumps, and first, second and third gate valves, wherein the operating water tank is provided with F1, F2 and F3 water level switches respectively from bottom to top; the heat preservation water tank is provided with F4 and F5 water level switches respectively from bottom to top; the first temperature sensor is arranged in the operating water tank, the second temperature sensor is arranged in the heat preservation water tank, and the third temperature sensor is arranged on the pipeline between the second electromagnetic two-way valve and a hot water pipe meshwork; and the second gate valve is arranged at the bottom of the operating water tank, and the third gate valve is arranged at the bottom of the heat preservation water tank.

Chinese patent publication No. CN107687707A discloses a hot water system applying air source and a control method thereof. Small amount of water in a first-grade water tank is heated by the air source, and the heated water is successively stored in a second-grade water tank; the first-grade water tank is adjacent to an air source hot pump; the second-grade water tank closes to a user.

Chinese patent publication No. CN10142445 1A discloses an air source heat pump water heater with a double-water tank system. The water heater comprises a main machine, a heating water tank, a heat-preservation water tank and a controller, wherein the heating water tank is parallelly connected with a water supplementing system consisting of a water meter, a first electromagnetic valve, a first ball valve and a first check valve; the heat-preservation water tank is connected with a water supply system consisting of a fourth electromagnetic valve, a second ball valve and a third ball valve; and the main machine forms a hot water circulating system together with a second electromagnetic valve, a third electromagnetic valve, the fourth electromagnetic valve, a fifth electromagnetic valve and a second check valve. The heating water tank, a first high water level switch, a first low water level switch, a heating water tank temperature sensor, the heat-preservation water tank, a second high water level switch, a second low water level switch and a heat-preservation water tank sensor form a water storage system. A fourth ball valve, a fifth ball valve, a first butterfly valve, a second butterfly valve, a second circulating water pump and a target flow switch form a cleaning system.

Chinese patent publication No. CN1818498A discloses an air source heat pump water heater comprises a main body, a thermal storage insulated water tank and a controller. The main body is contactly made up of a finned tube type evaporimeter, an auxiliary frost-dissolving heat exchanger, a gas-liquid separator, a compressor, a double pipe heat exchanger, a reservoir, an electronic expansion valve, a reserving valve, a magnetic valve, a one-way valve and the relative refrigeration fittings. The double pipe heat exchanger is connected with a refrigerant and a heat water-circulating pipe lines separately to make the refrigerant and water exchange heat. The heat water-circulating pipes are disposed on the upper and lower parts of the heat storage insulated water tank separately.

Accordingly, there is a need in the art for a new a control method for a hot water unit to solve the above problem.

### SUMMARY OF THE INVENTION

In order to solve the above problem in the prior art, that is, to solve the problem in the above existing water heater that it will take a period of time to heat the water in the heat preservation water tank to a required water temperature by means of circularly heating after replenishing water, so that the water temperature in the heat preservation water tank cannot satisfy user's requirements on use in the heating process, thus affecting the normal use by the user, the present disclosure provides a control method for a hot water unit.

In the control method for a hot water unit provided by the present disclosure, the hot water unit includes a main heating machine, a pressure-bearing water tank, a heat preservation water tank and a water mixing valve; a water inlet of the pressure-bearing water tank is configured to receive tap water, and a drain port of the heat preservation water tank is configured to supply domestic water; a water outlet of the pressure-bearing water tank is connected to a first inlet of the water mixing valve, a water outlet of the heat preservation water tank is connected to a second inlet of the water mixing valve, and an outlet of the water mixing valve is connected to a water inlet of the main heating machine; and a water outlet of the main heating machine is connected to a water return port of the pressure-bearing water tank and a water return port of the heat preservation water tank through a valve member; and the control method includes: acquiring an outflow water temperature of the water outlet of the main heating machine and an actual water temperature and actual water level of the heat preservation water tank; comparing the outflow water temperature and the actual water temperature with a user-set water temperature respectively; comparing the actual water level with a preset circulating heating water level and an overflow water level; and controlling the main heating machine, the water mixing valve and the valve member based on a comparison result.

According to the present invention the step of controlling the main heating machine, the water mixing valve and the valve member based on the comparison result includes: if the actual water level is higher than the circulating heating water level and lower than the overflow water level, and the difference between the actual water temperature and the user-set water temperature is smaller than or equal to a preset allowable temperature difference, then starting the main heating machine, controlling the water mixing valve to adjust the outflow water temperature to the user-set water temperature according to the comparison result of the outflow water temperature and the user-set water temperature, and at the same time, controlling the valve member to selectively conduct the water outlet of the main heating machine with the water return port of the pressure-bearing water tank or the water return port of the heat preservation water tank according to the comparison result of the outflow water temperature and the user-set water temperature.

As a preferred technical solution of the above control method provided by the present disclosure, the step of controlling the water mixing valve to adjust the outflow water temperature to the user-set water temperature according to the comparison result of the outflow water temperature and the user-set water temperature includes: if the outflow water temperature is lower than the user-set water temperature, then decreasing the flow rate of the water outlet of the pressure-bearing water tank and/or increasing the flow rate of the water outlet of the heat preservation water tank through the water mixing valve; and if the outflow water temperature is higher than the user-set water temperature, then increasing the flow rate of the water outlet of the pressure-bearing water tank and/or decreasing the flow rate of the water outlet of the heat preservation water tank through the water mixing valve, so as to reduce the outflow water temperature to the user-set water temperature.

As a preferred technical solution of the above control method provided by the present disclosure, the step of controlling the valve member to selectively conduct the water outlet of the main heating machine with the water return port of the pressure-bearing water tank or the water return port of the heat preservation water tank according to the comparison result of the outflow water temperature and the user-set water temperature includes: if the outflow water temperature is lower than the user-set water temperature, then conducting the water outlet of the main heating machine with the water return port of the pressure-bearing water tank through the valve member; and/or if the outflow water temperature is higher than or equal to the user-set water temperature, then conducting the water outlet of the main heating machine with the water return port of the heat preservation water tank through the valve member.

As a preferred technical solution of the above control method provided by the present disclosure, the step of controlling the main heating machine, the water mixing valve and the valve member based on the comparison result includes: if the actual water level is lower than the circulating heating water level, then starting the main heating machine, controlling the water mixing valve to only allow conduction of the water outlet of the pressure-bearing water tank with the water inlet of the main heating machine, and controlling the valve member to only allow conduction of the water outlet of the main heating machine with the water return port of the heat preservation water tank.

As a preferred technical solution of the above control method provided by the present disclosure, the step of controlling the main heating machine, the water mixing valve and the valve member based on the comparison result includes: if the actual water level is higher than the circulating heating water level, and the difference between the actual water temperature and the user-set water temperature is larger than a preset allowable temperature difference, then starting the main heating machine, controlling the water mixing valve to only allow conduction of the water outlet of the heat preservation water tank with the water inlet of the main heating machine, and controlling the valve member to only allow conduction of the water outlet of the main heating machine with the water return port of the heat preservation water tank.

As a preferred technical solution of the above control method provided by the present disclosure, the main heating machine is a heat pump main machine, and before the step of controlling the main heating machine, the water mixing valve and the valve member based on the comparison result, the control method further includes: acquiring an inflow water temperature of the water inlet of the main heating machine; calculating an actual temperature difference between the outflow water temperature and the inflow water temperature; comparing the actual temperature difference with a preset first temperature difference; and if the actual temperature difference is smaller than the first temperature difference, then controlling the heat pump main machine to enter a defrosting mode, controlling the valve member to only allow conduction of the water outlet of the main heating machine with the water return port of the pressure-bearing water tank, and controlling the water mixing valve to conduct the water outlet of the pressure-bearing water tank with the water inlet of the main heating machine.

As a preferred technical solution of the above control method provided by the present disclosure, after the heat pump main machine is controlled to enter the defrosting mode, when the water mixing valve is controlled to conduct the water outlet of the pressure-bearing water tank with the water inlet of the main heating machine, the control method further includes: comparing the actual temperature difference with a preset second temperature difference; and if the actual temperature difference is smaller than the second temperature difference, then decreasing the flow rate of the water outlet of the pressure-bearing water tank and/or increasing the flow rate of the water outlet of the heat preservation water tank through the water mixing valve, so that the actual temperature difference is larger than or equal to the second temperature difference.

As a preferred technical solution of the above control method provided by the present disclosure, a first water pump is provided between the water mixing valve and the water inlet of the main heating machine, and the first water pump is started at the same time of controlling the water mixing valve to conduct the water inlet of the main heating machine with the water outlet of the pressure-bearing water tank and/or the water outlet of the heat preservation water tank.

As a preferred technical solution of the above control method provided by the present disclosure, a first on-off valve is provided between the water outlet of the pressure-bearing water tank and the water mixing valve, and the first on-off valve is opened at the same time of controlling the water mixing valve to conduct the water inlet of the main heating machine with the water outlet of the pressure-bearing water tank; a second on-off valve is connected to the water return port of the heat preservation water tank, and the second on-off valve is opened at the same time of controlling the valve member to conduct the water outlet of the main heating machine with the water return port of the heat preservation water tank.

According to the control method for the hot water unit of the present disclosure, the outflow water temperature of the water outlet of the main heating machine and the actual water temperature of the heat preservation water tank are compared with the user-set water temperature respectively, the actual water level of the heat preservation water tank is compared with the preset circulating heating water level and the overflow water level, and then the main heating machine, the water mixing valve and the valve member are controlled based on a comparison result. Therefore, when the actual water level of the heat preservation water tank is higher than the circulating heating water level and lower than the overflow water level, and a difference between the actual water temperature and the user-set water temperature is smaller than or equal to a preset allowable temperature difference, the water mixing valve can be used to adjust the flow rate ratio of the water entering the main heating machine from the pressure-bearing water tank and the water entering the main heating machine from the heat preservation water tank, so that the adjusted water directly enters the heat preservation water tank after one-time heating by the main heating machine, which can always ensure that the user's requirements on use are satisfied.

In addition, in the control method for the hot water unit according to the present disclosure, in the dynamic adjustment process of the water mixing valve, if the outflow water temperature is lower than the user-set water temperature, the valve member conducts the water outlet of the main heating machine with the water return port of the pressure-bearing water tank, so that the water that does not meet the requirement of the user-set water temperature flowing out of the water outlet of the main heating machine flows back to the pressure-bearing water tank, thereby preventing the water that does not meet the temperature requirement from flowing into the heat preservation water tank. Therefore, it is further ensured that the water temperature of the heat preservation water tank can always meet the user's requirements on use when replenishing water, so as to improve the user's experience in use.

### BRIEF DESCRIPTION OF THE DRAWINGS

The hot water unit of the present disclosure and a control method therefor will be described below with reference to accompanying drawings. In the drawings:
FIG. 1 is a schematic structural view of the hot water unit of the present embodiment; and
FIG. 2 is a schematic flowchart of a control method for the hot water unit of the present embodiment.

List of reference signs:
1: main heating machine; 11: second temperature sensor; 12: third temperature sensor; 2: pressure-bearing water tank; 21: third on-off valve; 22: first water purification device; 23: first check valve; 3: heat preservation water tank; 31: water level detector; 32: first temperature sensor; 33: second water pump; 34: third check valve; 4: domestic return water pipe; 5: second on-off valve; 6: first on-off valve; 7: second check valve; 8: three-way valve; 9: water mixing valve; 91: first water pump; 92: second water purification device.

### DETAILED DESCRIPTION OF THE EMBODIMENT(S) OF THE INVENTION

Preferred embodiments of the present disclosure will be described below with reference to the accompanying drawings. It should be understood by those skilled in the art that these embodiments are only used to explain the technical principles of the present disclosure, and are not intended to limit the scope of protection of the present disclosure. For example, although the present embodiment is described by taking a heat pump type hot water unit as an example, those skilled in the art can apply the present disclosure to other types of hot water units without departing from the principle of the present disclosure, such as electric heating type hot water unit, solar type hot water unit, etc.

It should be noted that in the description of the present disclosure, terms indicating directional or positional relationships, such as "center", "upper", "lower", "left", "right", "vertical", "horizontal", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first", "second" and "third" are only used for descriptive purposes, and should not be interpreted as indicating or implying relative importance.

In addition, it should also be noted that in the description of the present disclosure, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

In order to solve the problem in the above existing water heater that the water temperature in the heat preservation water tank cannot satisfy user's requirements on use in the process of heating the water in the heat preservation water tank to a temperature set by the user after replenishing water, which affects the normal use by the user, the present disclosure provides a hot water unit and a control method therefor.

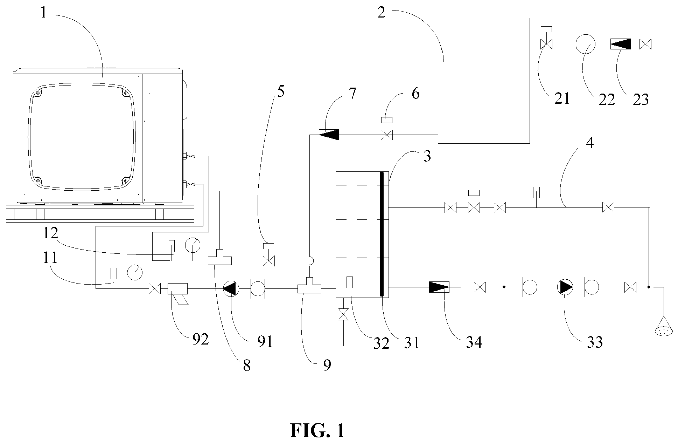

First, the hot water unit provided by the present embodiment is shown in FIG. 1. The hot water unit includes a main heating machine 1, a pressure-bearing water tank 2, a heat preservation water tank 3 and a water mixing valve 9; a water inlet of the pressure-bearing water tank 2 (an end of the pressure-bearing water tank 2 that is connected with a third on-off valve 21 in FIG. 1) is configured to receive tap water, and a drain port of the heat preservation water tank 3 (an end of the heat preservation water tank 3 that is connected with a third check valve 34 in FIG. 1) is configured to supply domestic water; a water outlet of the pressure-bearing water tank 2 is connected to a first inlet of the water mixing valve 9, a water outlet of the heat preservation water tank 3 is connected to a second inlet of the water mixing valve 9, and an outlet of the water mixing valve 9 is connected to a water inlet of the main heating machine 1; a water outlet of the main heating machine 1 is connected to a water return port of the pressure-bearing water tank 2 and a water return port of the heat preservation water tank 3 through a valve member (such as a three-way valve 8 in FIG. 1).

Exemplarily, in FIG. 1 of the present embodiment, an example is illustrated in which the valve member of the water outlet of the main heating machine 1 is the three-way valve 8, and the water outlet of the main heating machine 1 is connected to the water return port of the pressure-bearing water tank 2 and the water return port of the heat preservation water tank 3 through the three-way valve 8. The three-way valve 8 is mainly configured to selectively supply the water discharged from the water outlet of the main heating machine 1 to the pressure-bearing water tank 2 or the heat preservation water tank 3 according to different situations; as another implementation of the above valve member configured to achieve this purpose, the valve member may include a fourth on-off valve (not shown in the figure) and a fifth on-off valve (not shown in the figure); specifically, the fourth on-off valve is arranged between the water outlet of the main heating machine 1 and the water return port of the pressure-bearing water tank 2, and the fifth on-off valve is arranged between the water outlet of the main heating machine 1 and the water return port of the heat preservation water tank 3.

In the present embodiment, in addition to selectively supplying the water discharged from the water outlet of the pressure-bearing water tank 2 and the water outlet of the heat preservation water tank 3 to the water inlet of the main heating machine 1, the water mixing valve 9 also needs to play the role of mixing the water from the pressure-bearing water tank 2 and the water from the heat preservation water tank 3 to a required temperature. At present, the water mixing valve 9 includes a manual mechanical adjustment type and an electric temperature control valve. At the same time, due to change of an internal waterflow section of the water mixing valve 9 during the adjustment process, it can also play a role of adjusting the flow rate. Therefore, the water mixing valve 9 can also only allow the water from the pressure-bearing water tank 2 to pass through and adjust its flow rate, and can also only allow the water from the heat preservation water tank 3 to pass through and adjust its flow rate. The specific structure of the water mixing valve 9 belongs to the prior art, so the specific structure of the water mixing valve 9 will not be described herein. However, those skilled in the art can refer to electric temperature control valves disclosed in Chinese patent publication Nos. CN105626903A, CN205780896U, CN208651635U, etc., and the existing water mixing valves 9 on the market in the process of implementing the hot water unit of the present disclosure, and select and use the water mixing valve according to actual needs.

In the above hot water unit provided by the present disclosure, in the water heating process, the flow rate ratio of the water entering the main heating machine 1 from the pressure-bearing water tank 2 and the water entering the main heating machine 1 from the heat preservation water tank 3 is adjusted by the water mixing valve 9, so that the adjusted water, after one-time heating by the main heating machine 1, directly enters the heat preservation water tank 3 to always ensure that the user's requirements on use are satisfied; at the same time, in the dynamic adjustment process of the water mixing valve 9, the water that does not meet the temperature requirements flowing out of the water outlet of the main heating machine can flow back to the pressure-bearing water tank 2 through the valve member connected to the water outlet of the main heating machine 1, which prevents the water that does not meet the temperature requirements from flowing into the heat preservation water tank 3.

The main heating machine 1 in the present embodiment can be selected as a heat pump main machine, and the heat pump main machine includes a water heating cavity and a first heat exchanger configured to heat the water in the water heating cavity; the first heat exchanger is connected to an electronic expansion valve, a compressor and a second heat exchanger through a refrigerant pipeline to form a refrigerant circulation loop; the water outlet and the water inlet of the main heating machine 1 communicate with the water heating cavity. It can be understood that the water heating cavity of the heat pump main machine can be formed in a coil having a certain length, so that the water flow path which obtains the heating effect can be extended. The first heat exchanger can be arranged as a coil type parallel to an extension path of the water heating cavity. Therefore, there is enough time to heat the flowing water, and when the water heating cavity is formed in the coil, a contact area between a unit volume of water and the first heat exchanger is larger, which is more advantageous for the heat exchange between the first heat exchanger and the water flow.

When heating the water, the first heat exchanger is used as a condenser and the second heat exchanger is used as an evaporator; and when heating the water in an external environment with extremely low temperature, a surface of the second heat exchanger will be frosted, thus reducing a water heating effect. When defrosting, it is necessary to use the first heat exchanger as an evaporator and use the second heat exchanger as a condenser, so as to use the heat released by the second heat exchanger for defrosting.

In the above hot water unit provided by the present embodiment, if the main heating machine 1 is a heat pump main machine, then in the process of defrosting the outdoor second heat exchanger connected with the heat pump main machine through the refrigerant circulation pipeline, a water circulation can be formed between the heat pump main machine and the pressure-bearing water tank 2 by conducting the water outlet of the heat pump main machine with the water return port of the pressure-bearing water tank 2 by adjusting the three-way valve 8, and conducting the water inlet of the heat pump main machine with the water outlet of the pressure-bearing water tank 2 through the water mixing valve 9. In this way, a larger amount of water exchanges heat with the first heat exchanger, which is advantageous for improving a heat absorption effect of the first heat exchanger, thereby improving a defrosting effect of the second heat exchanger.

As a preferred implementation of the above hot water unit provided by the present embodiment, the hot water unit further includes at least one of a water level detector 31, a first temperature sensor 32, a second temperature sensor 11, a third temperature sensor 12, a first on-off valve 6, a second on-off valve 5, a third on-off valve 21, a first water pump 91 and a second water pump 33; the water level detector 31 is arranged in the heat preservation water tank 3 and is configured to detect a water level of the heat preservation water tank 3; the first temperature sensor 32 is arranged in the heat preservation water tank 3 and is configured to detect a water temperature in the heat preservation water tank 3; the second temperature sensor 11 is arranged on a water inlet side of the main heating machine 1; the third temperature sensor 12 is arranged on a water outlet side of the main heating machine 1; the first on-off valve 6 is arranged between the water outlet of the pressure-bearing water tank 2 and the water mixing valve 9; the second on-off valve 5 is arranged between the three-way valve 8 and the water return port of the heat preservation water tank 3; the third on-off valve 21 is arranged on a water inlet side of the pressure-bearing water tank 2; the first water pump 91 is arranged between the main heating machine 1 and the water mixing valve 9, and can provide power for the water in the pressure-bearing water tank 2 and the heat preservation water tank 3 to enter the main heating machine 1 when the water is required to be heated; and the second water pump 33 is arranged on a drain port side of the heat preservation water tank 3 to provide power for domestic water. The first on-off valve 6, the second on-off valve 5 and the third on-off valve 21 in the present embodiment can be selected as solenoid valves and electric valves, so as to facilitate an automatic control of the hot water unit.

As a preferred implementation of the above hot water unit provided by the present embodiment, the hot water unit further includes a controller; a signal input end of controller is communicatively connected to at least one of the water level detector 31, the first temperature sensor 32, the second temperature sensor 11 and the third temperature sensor 12; and a signal output end of the controller is communicatively connected to at least one of the water mixing valve 9, the three-way valve 8, the first on-off valve 6, the second on-off valve 5, the third on-off valve 21, the first water pump 91 and the second water pump 33.

Exemplarily, after the user uses the hot water in the heat preservation water tank 3, the water level detector 31 can detect that the water level of the heat preservation water tank 3 drops, and then the main heating machine 1 is started immediately. The flow rate ratio of the water entering the main heating machine 1 from the pressure-bearing water tank 2 and the water entering the main heating machine 1 from the heat preservation water tank 3 is adjusted by the water mixing valve 9; at the same time, according to the water temperature on the water inlet side of the main heating machine 1 detected by the second temperature sensor 11, or according to the water temperature on the water outlet side of the main heating machine 1 detected by the third temperature sensor 12, the adjusted water enters the heat preservation water tank 3 after one-time heating by the main heating machine 1, which can always ensure that the user's requirements on use are satisfied.

In addition, if the water level in the heat preservation water tank 3 does not drop but the water temperature in the heat preservation water tank 3 is lowered below a water temperature range required by the user, then the three-way valve 8 immediately communicates the water outlet of the main heating machine 1 with the water return port of the heat preservation water tank 3, and the water mixing valve 9 communicates the water inlet of the main heating machine 1 with the water outlet of the heat preservation water tank 3; at the same time, the main heating machine 1 is started, and the water temperature in the heat preservation water tank 3 is increased by means of circularly heating.

In order to ensure the cleanness and sanitation of domestic water, a first water purification device 22 can be connected to the water inlet side of the pressure-bearing water tank 2; moreover, a second water purification device 92 can also be connected between the water inlet of the main heating machine 1 and the water mixing valve 9 in order to prevent too much scales from being accumulated in the heat preservation water tank 3, the main heating machine 1 and water flow pipelines. The first water purification device 22 and the second water purification device 92 are electronic descaling instruments or filters, in which the first water purification device 22 may preferably be a filter, and the second water purification device 92 may preferably be an electronic descaling instrument.

Further, in order to prevent the water from flowing back to affect the normal use of the hot water unit due to reasons such as abnormal water pressure, the hot water unit is further provided with at least one of a first check valve 23, a second check valve 7 and a third check valve 34; the first check valve 23 is arranged on the water inlet side of the pressure-bearing water tank 2 to prevent the water in the pressure-bearing water tank 2 from flowing back outward; the second check valve 7 is arranged between the water outlet of the pressure-bearing water tank 2 and the water mixing valve 9 to prevent the water from flowing back to the pressure-bearing water tank 2; and the third check valve 34 is arranged on a drain port side of a domestic hot water tank to prevent the water from flowing back to the heat preservation water tank 3.

As a preferred implementation of the above hot water unit provided by the present embodiment, the water pressure at a lower part of the pressure-bearing water tank 2 is larger, and the water outlet of the pressure-bearing water tank 2 can be arranged at the lower part of the pressure-bearing water tank 2, so as to facilitate the discharge of the water in the pressure-bearing water tank 2; similarly, the water outlet and/or the drain port of the heat preservation water tank 3 can also be arranged at the lower part of the heat preservation water tank 3. In addition, when the hot water of the hot water unit is used to be supplied to an apparatus that needs to use hot water repeatedly and circularly such as a heating installation, the heat preservation water tank 3 is further provided with a water inlet for connecting with a domestic return water pipe 4.

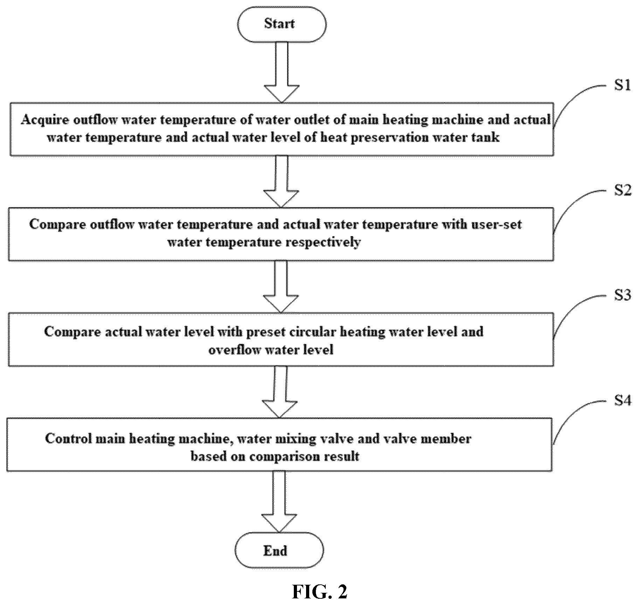

Then, the present embodiment also provides a control method for a hot water unit. As shown in FIG. 1, this hot water unit includes a main heating machine 1, a pressure-bearing water tank 2, a heat preservation water tank 3 and a water mixing valve 9; the water inlet of the pressure-bearing water tank 2 is configured to receive tap water, and the drain port of the heat preservation water tank 3 is configured to supply domestic water; the water outlet of the pressure-bearing water tank 2 is connected to the first inlet of the water mixing valve 9, the water outlet of the heat preservation water tank 3 is connected to the second inlet of the water mixing valve 9, and the outlet of the water mixing valve 9 is connected to the water inlet of the main heating machine 1; the water outlet of the main heating machine 1 is connected to the water return port of the pressure-bearing water tank 2 and the water return port of the heat preservation water tank 3 through a valve member. As shown in FIG. 2, the control method includes:
S1: acquiring an outflow water temperature of the water outlet of the main heating machine 1 and an actual water temperature and actual water level of the heat preservation water tank 3;
S2: comparing the outflow water temperature and the actual water temperature with a user-set water temperature respectively;
S3: comparing the actual water level with a preset circulating heating water level and an overflow water level; and
S4: controlling the main heating machine 1, the water mixing valve 9 and the valve member based on a comparison result.

According to the control method for the hot water unit of the present embodiment, the outflow water temperature of the water outlet of the main heating machine 1 and the actual water temperature of the heat preservation water tank 3 are compared with the user-set water temperature respectively, the actual water level of the heat preservation water tank 3 is compared with the preset circulating heating water level and the overflow water level, and then the main heating machine 1, the water mixing valve 9 and the valve member are controlled based on a comparison result, so that an automatic control of the hot water unit can be realized according to the acquired specific information; moreover, it is ensured that when the actual water level of the heat preservation water tank 3 is higher than the circulating heating water level and lower than the overflow water level, and a difference between the actual water temperature and the user-set water temperature is smaller than or equal to a preset allowable temperature difference, the water mixing valve 9 can be used to adjust the flow rate ratio of the water entering the main heating machine 1 from the pressure-bearing water tank 2 and the water entering the main heating machine 1 from the heat preservation water tank 3, so that the adjusted water directly enters the heat preservation water tank 3 after one-time heating by the main heating machine 1, which can always ensure that the user's requirements on use are satisfied.

The present embodiment is described by taking the three-way valve 8 in FIG. 1 as the valve member; the outflow water temperature of the water outlet of the main heating machine 1 can be monitored in real time by the third temperature sensor 12, the actual water temperature of the heat preservation water tank 3 can be monitored in real time by the first temperature sensor 32, and the actual water level of the heat preservation water tank 3 can be monitored in real time by the water level detector 31.

It should be noted that although the specific steps of the control method for the hot water unit of the present disclosure have been described above in detail, those skilled in the art can combine, split the above steps and exchange the order thereof without departing from the basic principle of the present disclosure. The thus-modified technical solutions do not change the basic idea of the present disclosure, and therefore also fall within the scope of protection of the present disclosure. For example, step S2 and step S3 may be executed simultaneously, or may be executed sequentially in any order.

As a preferred implementation of the above control method provided by the present embodiment, in step S4, the step of controlling the main heating machine 1, the water mixing valve 9 and the valve member based on the comparison result includes: if the actual water level is higher than the circulating heating water level and lower than the overflow water level, and the difference between the actual water temperature and the user-set water temperature is smaller than or equal to the preset allowable temperature difference, then starting the main heating machine 1 for heating, controlling the water mixing valve 9 to adjust the outflow water temperature to the user-set water temperature according to the comparison result of the outflow water temperature and the user-set water temperature, and at the same time, controlling the valve member to selectively conduct the water outlet of the main heating machine 1 with the water return port of the pressure-bearing water tank 2 or the water return port of the heat preservation water tank 3 according to the comparison result of the outflow water temperature and the user-set water temperature.

It will be understood by those skilled in the art that when adjusting the outflow water temperature to the user-set water temperature, specifically, the control program can actually be set to adjust the outflow water temperature to a certain range determined based on the user-set water temperature. For example, if the user-set water temperature is 60°C, then the adjusted temperature may be set to 59°C~61°C. Such a setting can generally meet user's actual requirements in practice, and should still fall within the scope of protection of the present disclosure. The preset allowable temperature difference may be set according to conditions such as actual requirements and the accuracy of the temperature sensors. For example, the preset allowable temperature difference may be any value between 2°C and 3°C.

Specifically, the step of controlling the water mixing valve 9 to adjust the outflow water temperature to the user-set water temperature according to the comparison result of the outflow water temperature and the user-set water temperature includes: if the outflow water temperature is lower than the user-set water temperature, then decreasing the flow rate of the water outlet of the pressure-bearing water tank 2 and/or increasing the flow rate of the water outlet of the heat preservation water tank 3 through the water mixing valve 9, so as to increase the outflow water temperature to the user-set water temperature. In addition, if the outflow water temperature is higher than the user-set water temperature, the flow rate of the water outlet of the pressure-bearing water tank 2 is increased and/or the flow rate of the water outlet of the heat preservation water tank 3 is decreased through the water mixing valve 9, so as to reduce the outflow water temperature to the user-set water temperature.

At the same time, the step of controlling the valve member to selectively conduct the water outlet of the main heating machine 1 with the water return port of the pressure-bearing water tank 2 or the water return port of the heat preservation water tank 3 according to the comparison result of the outflow water temperature and the user-set water temperature includes: if the outflow water temperature is lower than the user-set water temperature, then conducting the water outlet of the main heating machine 1 with the water return port of the pressure-bearing water tank 2 through the valve member; and/or if the outflow water temperature is higher than or equal to the user-set water temperature, then conducting the water outlet of the main heating machine 1 with the water return port of the heat preservation water tank 3 through the valve member.

In the control method for the hot water unit according to the present disclosure, in the dynamic adjustment process of the water mixing valve 9, if the outflow water temperature is lower than the user-set water temperature, the valve member conducts the water outlet of the main heating machine 1 with the water return port of the pressure-bearing water tank 2, so that the water that does not meet the requirement of the user-set water temperature flowing out of the water outlet of the main heating machine flows back to the pressure-bearing water tank 2, thereby preventing the water that does not meet the temperature requirement from flowing into the heat preservation water tank 3. Therefore, it is further ensured that the water temperature of the heat preservation water tank 3 can always meet the user's requirements on use when replenishing water, so as to improve the user's experience in use.

As a preferred implementation of the above control method provided by the present embodiment, in step S4, the step of controlling the main heating machine 1, the water mixing valve 9 and the valve member based on the comparison result includes: if the actual water level is lower than the circulating heating water level, then starting the main heating machine 1 for heating, controlling the water mixing valve 9 to only allow conduction of the water outlet of the pressure-bearing water tank 2 with the water inlet of the main heating machine 1, and controlling the valve member to only allow conduction of the water outlet of the main heating machine 1 with the water return port of the heat preservation water tank 3.

When the actual water level in the heat preservation water tank 3 is lower than the circulating heating water level, then the amount of hot water in the heat preservation water tank 3 is lower. In order to give considerations to both water replenishing efficiency and water heating efficiency, the above method can be used to enable the water in the pressure-bearing water tank 2 to directly enter the heat preservation water tank 3 after one-time heating by the main heating machine 1. If the requirement of the user-set water temperature is not met after the one-time heating, the following circular heating method can be used to circularly heat the water in the heat preservation water tank 3 to the user-set water temperature through the main heating machine 1. At the same time, when the hot water in the heat preservation water tank 3 is naturally cooled to be below the user-set water temperature, the method of circular heating can also be used.

As a preferred implementation of the above control method provided by the present embodiment, in step S4, the step of controlling the main heating machine 1, the water mixing valve 9 and the valve member based on the comparison result includes: if the actual water level is higher than the circulating heating water level, and the difference between the actual water temperature and the user-set water temperature is larger than the preset allowable temperature difference, then starting the main heating machine 1 for heating, controlling the water mixing valve 9 to only allow conduction of the water outlet of the heat preservation water tank 3 with the water inlet of the main heating machine 1, and controlling the valve member to only allow conduction of the water outlet of the main heating machine 1 with the water return port of the heat preservation water tank 3. That is, the hot water in the heat preservation water tank 3 is heated to the user-set water temperature by means of circularly heating.

As a preferred implementation of the above control method provided by the present embodiment, the main heating machine 1 is a heat pump main machine, and before the step of controlling the main heating machine 1, the water mixing valve 9 and the valve member based on the comparison result in step S4, the method further includes: acquiring an inflow water temperature of the water inlet of the main heating machine 1; calculating an actual temperature difference between the outflow water temperature and the inflow water temperature; comparing the actual temperature difference with a preset first temperature difference; and if the actual temperature difference is smaller than the first temperature difference, then controlling the heat pump main machine to enter a defrosting mode, controlling the valve member to only allow conduction of the water outlet of the main heating machine 1 with the water return port of the pressure-bearing water tank 2, and controlling the water mixing valve 9 to conduct the water outlet of the pressure-bearing water tank 2 with the water inlet of the main heating machine 1.

Exemplarily, the inflow water temperature of the water inlet of the main heating machine 1 can be monitored in real time by the second temperature sensor 11. The first temperature difference can be used to measure the heating effect of the main heating machine 1. When the actual temperature difference between the outflow water temperature and the inflow water temperature is smaller than the first temperature difference, it means that the heating effect of the main heating machine 1 is low, and the water in the heat preservation water tank 3 cannot be heated normally; whereas in winter, when the main heating machine 1 is a heat pump main machine, this situation is often caused by frosting on the outdoor second heat exchanger connected with the heat pump main machine. At this time, the heat pump main machine is controlled to enter the defrosting mode, that is, the first heat exchanger is used as an evaporator and the second heat exchanger is used as a condenser, so as to use the heat released by the second heat exchanger to defrost. At the same time, the valve member is controlled to only allow conduction of the water outlet of the main heating machine 1 with the water return port of the pressure-bearing water tank 2, and the water mixing valve 9 is controlled to conduct the water outlet of the pressure-bearing water tank 2 with the water inlet of the main heating machine 1, so that a water circulation is formed between the main heating machine 1 and the pressure-bearing water tank 2. In this way, a larger amount of water exchanges heat with the first heat exchanger, which is advantageous for improving a heat absorption effect of the first heat exchanger, thereby improving a defrosting effect of the outdoor heat exchanger.

As a preferred implementation of the above control method provided by the present embodiment, after the heat pump main machine is controlled to enter the defrosting mode, when the water mixing valve 9 is controlled to conduct the water outlet of the pressure-bearing water tank 2 with the water inlet of the main heating machine 1, the control method further includes: comparing the actual temperature difference with a preset second temperature difference; and if the actual temperature difference is smaller than the second temperature difference, then decreasing the flow rate of the water outlet of the pressure-bearing water tank 2 and/or increasing the flow rate of the water outlet of the heat preservation water tank 3 through the water mixing valve 9, so that the actual temperature difference is larger than or equal to the second temperature difference.

Exemplarily, in special cases, when the main heating machine 1 is defrosting, the water temperature of the water inlet of the main heating machine 1 is higher than the water temperature of the water outlet. The second temperature difference is used to measure the defrosting effect of the main heating machine 1, so when the actual temperature difference between the outflow water temperature and the inflow water temperature is smaller than the second temperature difference, it means that the defrosting effect of the main heating machine 1 is low, and the water temperature in the pressure-bearing water tank 2 cannot meet the normal defrosting requirements of the main heating machine 1. At this time, the water mixing valve 9 can control part of the hot water in the heat preservation water tank 3 to be mixed with the cold water in the pressure-bearing water tank 2 before flowing into the main heating machine 1, so as to improve the defrosting effect of the main heating machine 1.

As a preferred implementation of the above control method provided by the present embodiment, the first water pump 91 is provided between the water mixing valve 9 and the water inlet of the main heating machine 1, and the first water pump 91 can provide power for the water in the pressure-bearing water tank 2 or the water in the heat preservation water tank 3 to enter the main heating machine 1 when the water is required to be heated; therefore, the first water pump 91 can be started at the same time of controlling the water mixing valve 9 to conduct the water inlet of the main heating machine 1 with the water outlet of the pressure-bearing water tank 2 and/or the water outlet of the heat preservation water tank 3.

As a preferred implementation of the above control method provided by the present embodiment, the first on-off valve 6 is provided between the water outlet of the pressure-bearing water tank 2 and the water mixing valve 9, and the first on-off valve 6 is opened at the same time of controlling the water mixing valve 9 to conduct the water inlet of the main heating machine 1 with the water outlet of the pressure-bearing water tank 2; the second on-off valve 5 is connected to the water return port of the heat preservation water tank 3, and the second on-off valve 5 is opened at the same time of controlling the valve member to conduct the water outlet of the main heating machine 1 with the water return port of the heat preservation water tank 3. When the hot water unit of the present embodiment does not need to heat the hot water in the heat preservation water tank 3, the first on-off valve 6 and the second on-off valve 5 can be closed to block the flow of water in the hot water unit, thereby realizing a reliable control of the above hot water unit provided by the present embodiment.

Of course, the above alternative implementations, as well as the alternative implementations and preferred implementations, can also be used in cooperation with each other, so as to obtain new implementations suitable for more specific application scenes through combination.

It should be understood by those skilled in the art that the control method for the hot water unit provided by the present embodiment may be stored as a program in a computer-readable storage medium. The storage medium includes several instructions for causing a computer device (which may be a personal computer, a server, or a network device, etc.) or a processor to execute some steps of the methods of various embodiments of the present disclosure. The above storage medium includes: a U disk, a mobile hard disk, a read-only memory (ROM), a random access memory (RAM), a magnetic disk or an optical disk and other media that can store program codes.

Furthermore, it will be understood by those skilled in the art that although some of the embodiments described herein include certain features included in other embodiments rather than others features, combinations of features of different embodiments are meant to be within the scope of protection of the present disclosure and to form different embodiments. For example, in the claims of the present disclosure, any of the claimed embodiments may be used in any combination.

Hitherto, the technical solutions of the present invention have been the in connection with the preferred embodiments shown in the accompanying drawings, but the scope of protection of the present invention is defined by the claims.

## Claims

1. A control method for a hot water unit, the hot water unit comprising a main heating machine (1), a pressure-bearing water tank (2), a heat preservation water tank (3) and a water mixing valve (9); a water inlet of the pressure-bearing water tank (2) is configured to receive tap water, and a drain port of the heat preservation water tank (3) is configured to supply domestic water; a water outlet of the pressure-bearing water tank (2) is connected to a first inlet of the water mixing valve (9), a water outlet of the heat preservation water tank (3) is connected to a second inlet of the water mixing valve (9), and an outlet of the water mixing valve (9) is connected to a water inlet of the main heating machine (1); and a water outlet of the main heating machine (1) is connected to a water return port of the pressure-bearing water tank (2) and a water return port of the heat preservation water tank (3) through a valve member;
**characterized in that** the control method comprises:
acquiring an outflow water temperature of the water outlet of the main heating machine (1) and an actual water temperature and actual water level of the heat preservation water tank (3);
comparing the outflow water temperature and the actual water temperature with a user-set water temperature respectively;
comparing the actual water level with a preset circulating heating water level and an overflow water level; and
controlling the main heating machine, the water mixing valve and the valve member based on a comparison result;
wherein the step of controlling the main heating machine (1), the water mixing valve (9) and the valve member based on the comparison result comprises:
if the actual water level is higher than the circulating heating water level and lower than the overflow water level, and the difference between the actual water temperature and the user-set water temperature is smaller than or equal to a preset allowable temperature difference, then starting the main heating machine (1), controlling the water mixing valve (9) to adjust the outflow water temperature to the user-set water temperature according to the comparison result of the outflow water temperature and the user-set water temperature, and at the same time, controlling the valve member to selectively conduct the water outlet of the main heating machine (1) with the water return port of the pressure-bearing water tank (2) or the water return port of the heat preservation water tank (3) according to the comparison result of the outflow water temperature and the user-set water temperature.

2. The control method according to claim 1, wherein the step of controlling the water mixing valve (9) to adjust the outflow water temperature to the user-set water temperature according to the comparison result of the outflow water temperature and the user-set water temperature comprises:
if the outflow water temperature is lower than the user-set water temperature, then decreasing the flow rate of the water outlet of the pressure-bearing water tank (2) and/or increasing the flow rate of the water outlet of the heat preservation water tank (3) through the water mixing valve (9); and/or
if the outflow water temperature is higher than the user-set water temperature, then increasing the flow rate of the water outlet of the pressure-bearing water tank (2) and/or decreasing the flow rate of the water outlet of the heat preservation water tank (3) through the water mixing valve (9), so as to reduce the outflow water temperature to the user-set water temperature.

3. The control method according to claim 1, wherein the step of controlling the valve member to selectively conduct the water outlet of the main heating machine (1) with the water return port of the pressure-bearing water tank (2) or the water return port of the heat preservation water tank (3) according to the comparison result of the outflow water temperature and the user-set water temperature comprises:
if the outflow water temperature is lower than the user-set water temperature, then conducting the water outlet of the main heating machine (1) with the water return port of the pressure-bearing water tank (2) through the valve member; and/or
if the outflow water temperature is higher than or equal to the user-set water temperature, then conducting the water outlet of the main heating machine (1) with the water return port of the heat preservation water tank (3) through the valve member.

4. The control method according to claim 1, wherein the step of controlling the main heating machine (1), the water mixing valve (9) and the valve member based on the comparison result comprises:
if the actual water level is lower than the circulating heating water level, then starting the main heating machine (1), controlling the water mixing valve (9) to only allow conduction of the water outlet of the pressure-bearing water tank (2) with the water inlet of the main heating machine (1), and controlling the valve member to only allow conduction of the water outlet of the main heating machine (1) with the water return port of the heat preservation water tank (3).

5. The control method according to claim 1, wherein the step of controlling the main heating machine (1), the water mixing valve (9) and the valve member based on the comparison result comprises:
if the actual water level is higher than the circulating heating water level, and the difference between the actual water temperature and the user-set water temperature is larger than a preset allowable temperature difference, then starting the main heating machine (1), controlling the water mixing valve (9) to only allow conduction of the water outlet of the heat preservation water tank (3) with the water inlet of the main heating machine (1), and controlling the valve member to only allow conduction of the water outlet of the main heating machine (1) with the water return port of the heat preservation water tank (3).

6. The control method according to claim 1, wherein the main heating machine (1) is a heat pump main machine, and before the step of controlling the main heating machine (1), the water mixing valve (9) and the valve member based on the comparison result, the control method further comprises:
acquiring an inflow water temperature of the water inlet of the main heating machine (1);
calculating an actual temperature difference between the outflow water temperature and the inflow water temperature;
comparing the actual temperature difference with a preset first temperature difference; and
if the actual temperature difference is smaller than the first temperature difference, then controlling the heat pump main machine to enter a defrosting mode, controlling the valve member to only allow conduction of the water outlet of the main heating machine (1) with the water return port of the pressure-bearing water tank (2), and controlling the water mixing valve (9) to conduct the water outlet of the pressure-bearing water tank (2) with the water inlet of the main heating machine (1).

7. The control method according to claim 6, wherein after the heat pump main machine is controlled to enter the defrosting mode, when the water mixing valve (9) is controlled to conduct the water outlet of the pressure-bearing water tank (2) with the water inlet of the main heating machine (1), the control method further comprises:
comparing the actual temperature difference with a preset second temperature difference; and
if the actual temperature difference is smaller than the second temperature difference, then decreasing the flow rate of the water outlet of the pressure-bearing water tank (2) and/or increasing the flow rate of the water outlet of the heat preservation water tank (3) through the water mixing valve (9), so that the actual temperature difference is larger than or equal to the second temperature difference.

8. The control method according to claim 1, wherein a first water pump (91) is provided between the water mixing valve (9) and the water inlet of the main heating machine (1), and the first water pump (91) is started at the same time of controlling the water mixing valve (9) to conduct the water inlet of the main heating machine (1) with the water outlet of the pressure-bearing water tank (2) and/or the water outlet of the heat preservation water tank (3).

9. The control method according to claim 1, wherein a first on-off valve (6) is provided between the water outlet of the pressure-bearing water tank (2) and the water mixing valve (9), and the first on-off valve (6) is opened at the same time of controlling the water mixing valve (9) to conduct the water inlet of the main heating machine (1) with the water outlet of the pressure-bearing water tank (2); and
a second on-off valve (5) is connected to the water return port of the heat preservation water tank (3), and the second on-off valve (5) is opened at the same time of controlling the valve member to conduct the water outlet of the main heating machine (1) with the water return port of the heat preservation water tank (3).

## Patentansprüche

1. Eine Steuermethode für eine Warmwasseranlage, wobei die Warmwasseranlage aus einer Hauptheizmaschine (1), einem Druckwassertank (2), einem Wärmespeichertank (3) und einem Wasserzumischventil (9) besteht; ein Wasserzulauf des Druckwassertanks (2) ist zum Empfang von Brauchwasser ausgelegt, und ein Ablauf des Wärmespeichertanks (3) ist zum Versorgung mit Trinkwasser ausgelegt; ein Wasserauslauf des Druckwassertanks (2) ist an einen ersten Einlass des Wasserzumischventils (9) angeschlossen, ein Wasserauslauf des Wärmespeichertanks (3) ist an einen zweiten Einlass des Wasserzumischventils (9) angeschlossen, und ein Ausgang des Wasserzumischventils (9) ist an einen Wasserzulauf der Hauptheizmaschine (1) angeschlossen; und ein Wasserauslauf der Hauptheizmaschine (1) ist über ein Ventilglied mit einem Rücklaufanschluss des Druckwassertanks (2) und einem Rücklaufanschluss des Wärmespeichertanks (3) verbunden;
**dadurch gekennzeichnet, dass** die Steuerungsmethode Folgendes umfasst:
die Ablaufwassertemperatur am Auslass der Hauptheizmaschine (1) sowie die tatsächliche Wassertemperatur und der tatsächliche Wasserstand des Wärmespeichers (3) erfassen;
den Ausflusswassertemperatur und die tatsächliche Wassertemperatur jeweils mit der vom Benutzer eingestellten Wassertemperatur vergleichen;
den tatsächlichen Wasserstand mit einem voreingestellten zirkulierenden Heizwasserstand und einem Überlauf-Wasserstand vergleichen; und
das Hauptheizgerät, das Wasserzumischventil und das Ventilglied basierend auf einem Vergleichsergebnis steuern;
wobei der Schritt der Steuerung der Hauptheizmaschine (1), des Wasserzumischventils (9) und des Ventilglieds basierend auf dem Vergleichsergebnis Folgendes umfasst:
Wenn der tatsächliche Wasserstand höher als der zirkulierende Heizwasserstand und niedriger als der Überlaufwasserstand ist und die Differenz zwischen der tatsächlichen Wassertemperatur und der vom Benutzer eingestellten Wassertemperatur kleiner oder gleich einer voreingestellten zulässigen Temperaturdifferenz ist, dann wird die Hauptheizmaschine (1) gestartet, der Wasserzumischventil (9) gesteuert, um die Ablaufwassertemperatur entsprechend dem Vergleichsergebnis der Ablaufwassertemperatur und der vom Benutzer eingestellten Wassertemperatur auf die vom Benutzer eingestellte Wassertemperatur einzustellen, und gleichzeitig wird das Ventilglied gesteuert, um je nach dem Vergleichsergebnis der Ablaufwassertemperatur und der vom Benutzer eingestellten Wassertemperatur die Wasserablauföffnung der Hauptheizmaschine (1) selektiv mit der Rücklauföffnung des drucktragenden Wasserspeichers (2) oder der Rücklauföffnung des Wärmerückhaltebeckens (3) zu verbinden.

2. Die Steuermethode gemäß Anspruch 1, wobei der Schritt der Steuerung des Wasserzumischventils (9), um die Ablaufwassertemperatur gemäß dem Vergleichsergebnis der Ablaufwassertemperatur und der vom Benutzer eingestellten Wassertemperatur auf die vom Benutzer eingestellte Wassertemperatur einzustellen, Folgendes umfasst:
Wenn die Ausflusswassertemperatur niedriger als die vom Benutzer eingestellte Wassertemperatur ist, wird die Durchflussmenge des Wasserabflusses des druckbelasteten Wasserspeichers (2) verringert und/oder die Durchflussmenge des Wasserabflusses des Wärmerückgewinnungswasserspeichers (3) über den Wasserzumischventil (9) erhöht; und/oder
Wenn die Ablaufwassertemperatur höher ist als die vom Benutzer eingestellte Wassertemperatur, wird die Durchflussmenge des Wasserablaufes des Druckbehälters (2) und/oder die Durchflussmenge des Wasserablaufes des Wärmespeicherbehälters (3) über das Wasserzumischventil (9) erhöht bzw. verringert, um die Ablaufwassertemperatur auf die vom Benutzer eingestellte Wassertemperatur zu reduzieren.

3. Die Steuermethode gemäß Anspruch 1, bei der der Schritt des Steuerns des Ventilglieds, um je nach dem Vergleichsergebnis der Abflusswassertemperatur und der vom Benutzer eingestellten Wassertemperatur auswählend den Wasserablauf der Hauptheizmaschine (1) mit dem Rücklaufanschluss des drucktragenden Wasserspeichers (2) oder dem Rücklaufanschluss des Wärmespeichers (3) zu verbinden, umfasst:
Wenn die Abflusstemperatur des Wassers niedriger ist als die vom Benutzer eingestellte Wassertemperatur, dann wird die Wasserauslassöffnung der Hauptheizmaschine (1) mit dem Rücklaufanschluss des drucktragenden Wasserspeichers (2) über das Ventilglied verbunden; und/oder
Wenn die Ablaufwassertemperatur höher oder gleich der vom Benutzer eingestellten Wassertemperatur ist, wird die Wasserablauföffnung der Hauptheizmaschine (1) über das Ventilmitglied mit dem Rücklaufanschluss des Wärmespeicherwasserbeckens (3) verbunden.

4. Die Steuermethode gemäß Anspruch 1, wobei der Schritt des Steuerns der Hauptheizmaschine (1), der Wasser-Mischventil (9) und des Ventilglied basierend auf dem Vergleichsergebnis umfasst:
Wenn der tatsächliche Wasserstand niedriger als der zirkulierende Heizwasserstand ist, wird der Hauptheizmaschine (1) gestartet, die Wasserzumischungsvorrichtung (9) so gesteuert, dass nur der Wasserablauf des drucktragenden Wasserspeichers (2) mit dem Wassereingang der Hauptheizmaschine (1) verbunden wird, und die Ventilmitglieder so gesteuert, dass nur der Wasserablauf der Hauptheizmaschine (1) mit dem Rücklaufanschluss des Wärmespeichers (3) verbunden wird.

5. Die Steuermethode gemäß Anspruch 1, bei der der Schritt der Steuerung der Hauptheizmaschine (1), der Wasserzumischventil (9) und des Ventilglieds auf der Grundlage des Vergleichsergebnisses umfasst:
Wenn der tatsächliche Wasserstand höher ist als der zirkulierende Heizwasserstand und die Differenz zwischen dem tatsächlichen Wassertemperatur und der vom Benutzer eingestellten Wassertemperatur größer als eine voreingestellte zulässige Temperaturdifferenz ist, dann wird die Hauptheizmaschine (1) gestartet, der Wassermischventil (9) so gesteuert, dass nur der Auslass des Wärmespeicherwasserbeckens (3) mit dem Einlass der Hauptheizmaschine (1) verbunden wird, und der Ventilteil so gesteuert, dass nur der Auslass der Hauptheizmaschine (1) mit dem Rücklaufanschluss des Wärmespeicherwasserbeckens (3) verbunden wird.

6. Die Steuermethode gemäß Anspruch 1, wobei die Hauptheizmaschine (1) eine Wärmepumpenhauptmaschine ist und vor dem Schritt des Steuerns der Hauptheizmaschine (1) sowie des Wasser-Mischventils (9) und des Ventilglieds basierend auf dem Vergleichsergebnis umfasst die Steuermethode weiter:
die Einfüllwassertemperatur der Hauptheizmaschine (1) erfassen;
die tatsächliche Temperaturdifferenz zwischen der Ausflusswassertemperatur und der Einflusswassertemperatur berechnen;
den tatsächlichen Temperaturunterschied mit einem voreingestellten ersten Temperaturunterschied vergleichen; und
Wenn die tatsächliche Temperaturdifferenz kleiner als die erste Temperaturdifferenz ist, dann die Wärmepumpenhauptmaschine in den Enteisungsmodus bringen, die Ventilkomponente so steuern, dass nur die Wasserablauföffnung der Hauptheizmaschine (1) mit der Wasserzulauföffnung des Druckwassertanks (2) verbunden wird, und die Wasserzumischungsventil (9) so steuern, dass die Wasserablauföffnung des Druckwassertanks (2) mit der Wasserzulauföffnung der Hauptheizmaschine (1) verbunden wird.

7. Die Steuermethode gemäß Anspruch 6, bei der nach dem Steuern der Wärmepumpenhauptmaschine zum Defrostmodes, wenn die Wasserzumischungsventil (9) gesteuert wird, um die Wasserauslassöffnung des drucktragenden Wasserspeichers (2) mit der Wassereinlassöffnung der Hauptheizmaschine (1) zu verbinden, umfasst weiterhin:
den tatsächlichen Temperaturunterschied mit einem voreingestellten zweiten Temperaturunterschied vergleichen; und
Wenn die tatsächliche Temperaturdifferenz kleiner als die zweite Temperaturdifferenz ist, dann wird die Durchflussmenge der Wasserablauföffnung des drucktragenden Wasserspeichers (2) verringert und/oder die Durchflussmenge der Wasserablauföffnung des Wärmespeichers (3) über die Wasserzumischungsvorrichtung (9) erhöht, damit die tatsächliche Temperaturdifferenz größer oder gleich der zweiten Temperaturdifferenz ist.

8. Die Steuermethode gemäß Anspruch 1, wobei eine erste Wasserpumpe (91) zwischen dem Wasserzumischventil (9) und der Wasserzufuhr der Hauptheizmaschine (1) angeordnet ist und die erste Wasserpumpe (91) gleichzeitig mit der Steuerung des Wasserzumischventils (9) gestartet wird, um die Wasserzufuhr der Hauptheizmaschine (1) mit der Wasseraustrittsöffnung des drucktragenden Wasserspeichers (2) und/oder der Wasseraustrittsöffnung des Wärmerückgewinnungswasserspeichers (3) zu verbinden.

9. Die Steuermethode gemäß Anspruch 1, bei der zwischen dem Wasserauslass des drucktragenden Wasserspeichers (2) und dem Wasserzumischventil (9) eine erste Absperrklappe (6) angeordnet ist, und die erste Absperrklappe (6) gleichzeitig mit der Steuerung des Wasserzumischventils (9) geöffnet wird, um den Wassereingang der Hauptheizmaschine (1) mit dem Wasserauslass des drucktragenden Wasserspeichers (2) zu verbinden; und
Ein zweites Absperrventil (5) ist mit dem Rücklaufanschluss des Wärmeisolierungswassertanks (3) verbunden, und das zweite Absperrventil (5) wird gleichzeitig mit der Steuerung des Ventilglieds geöffnet, um den Wasseraustritt der Hauptheizmaschine (1) mit dem Rücklaufanschluss des Wärmeisolierungswassertanks (3) zu verbinden.

## Revendications

1. Un procédé de commande pour une unité d'eau chaude, l'unité d'eau chaude comprenant une machine de chauffage principale (1), un réservoir d'eau sous pression (2), un réservoir d'eau thermique (3) et une vanne de mélange d'eau (9) ; une entrée d'eau du réservoir d'eau sous pression (2) est configurée pour recevoir de l'eau du robinet, et un port de drainage du réservoir d'eau thermique (3) est configuré pour fournir de l'eau domestique ; une sortie d'eau du réservoir d'eau sous pression (2) est connectée à une première entrée de la vanne de mélange d'eau (9), une sortie d'eau du réservoir d'eau thermique (3) est connectée à une deuxième entrée de la vanne de mélange d'eau (9), et une sortie de la vanne de mélange d'eau (9) est connectée à une entrée d'eau de la machine de chauffage principale (1) ; et une sortie d'eau de la machine de chauffage principale (1) est connectée à un port de retour d'eau du réservoir d'eau sous pression (2) et un port de retour d'eau du réservoir d'eau thermique (3) à travers un élément de vanne ;
**caractérisé en ce que** la méthode de contrôle comprend:
acquérir la température d'écoulement de l'eau à la sortie de la machine de chauffage principale (1) ainsi que la température réelle de l'eau et le niveau réel d'eau du réservoir de maintien de chaleur (3) ;
comparer respectivement la température de l'eau en sortie et la température réelle de l'eau avec la température de l'eau définie par l'utilisateur ;
comparer le niveau d'eau réel avec un niveau prédéfini d'eau de chauffage en circulation et un niveau de débordement d'eau ; et
contrôler la machine de chauffage principale, la vanne de mélange d'eau et le membre de vanne sur la base d'un résultat de comparaison ;
où l'étape de contrôle de la machine de chauffage principale (1), de la vanne de mélange d'eau (9) et de l'élément de vanne sur la base du résultat de comparaison comprend :
Si le niveau réel de l'eau est supérieur au niveau de l'eau de chauffage en circulation et inférieur au niveau de débordement, et que la différence entre la température réelle de l'eau et la température de l'eau définie par l'utilisateur est inférieure ou égale à une différence de température autorisée prédéfinie, alors démarrez la machine de chauffage principale (1), contrôlez la vanne de mélange d'eau (9) pour ajuster la température de l'eau en sortie à la température de l'eau définie par l'utilisateur selon le résultat de comparaison entre la température de l'eau en sortie et la température de l'eau définie par l'utilisateur, et simultanément, contrôlez le membre de vanne pour connecter sélectivement la sortie d'eau de la machine de chauffage principale (1) avec le port de retour d'eau du réservoir d'eau sous pression (2) ou le port de retour d'eau du réservoir d'eau de conservation de chaleur (3) selon le résultat de comparaison entre la température de l'eau en sortie et la température de l'eau définie par l'utilisateur.

2. Le procédé de commande selon la revendication 1, dans lequel l'étape de commande de la vanne de mélange d'eau (9) pour ajuster la température de l'eau sortante à la température d'eau définie par l'utilisateur en fonction du résultat de comparaison entre la température de l'eau sortante et la température d'eau définie par l'utilisateur comprend :
Si la température de l'eau en sortie est inférieure à la température d'eau définie par l'utilisateur, alors réduire le débit de la sortie d'eau du réservoir sous pression (2) et/ou augmenter le débit de la sortie d'eau du réservoir de conservation de chaleur (3) via la vanne de mélange d'eau (9) ; et/ou
Si la température de l'eau en sortie est supérieure à la température définie par l'utilisateur, augmenter le débit de la sortie de la cuve de pression (2) et/ou diminuer le débit de la sortie de la cuve de conservation de chaleur (3) via le mélangeur d'eau (9), afin de réduire la température de l'eau en sortie à la température définie par l'utilisateur.

3. Le procédé de commande selon la revendication 1, dans lequel l'étape de commande du membre de valve pour connecter sélectivement la sortie d'eau de la machine de chauffage principale (1) avec le port de retour d'eau du réservoir d'eau sous pression (2) ou le port de retour d'eau du réservoir d'eau de conservation thermique (3) selon le résultat de comparaison de la température de l'eau en sortie et de la température d'eau définie par l'utilisateur comprend :
si la température de l'eau en sortie est inférieure à la température de l'eau définie par l'utilisateur, alors connecter la sortie d'eau de la machine de chauffage principale (1) au port de retour d'eau du réservoir d'eau sous pression (2) via l'élément de valve ; et/ou
Si la température de l'eau en sortie est supérieure ou égale à la température de l'eau définie par l'utilisateur, alors connecter la sortie d'eau de la machine de chauffage principale (1) au port de retour d'eau du réservoir de conservation de chaleur (3) via l'élément de valve.

4. Le procédé de commande selon la revendication 1, dans lequel l'étape de commande de la machine de chauffage principale (1), de la vanne de mélange d'eau (9) et de l'élément de vanne sur la base du résultat de comparaison comprend :
Si le niveau réel d'eau est inférieur au niveau d'eau de chauffage en circulation, alors démarrez la machine de chauffage principale (1), contrôlez la vanne de mélange d'eau (9) pour ne permettre que la conduction entre la sortie d'eau du réservoir d'eau sous pression (2) et l'entrée d'eau de la machine de chauffage principale (1), et contrôlez le membre de vanne pour ne permettre que la conduction entre la sortie d'eau de la machine de chauffage principale (1) et le port de retour d'eau du réservoir d'eau de conservation thermique (3).

5. Le procédé de commande selon la revendication 1, dans lequel l'étape de commande de la machine de chauffage principale (1), de la vanne de mélange d'eau (9) et de l'élément de vanne sur la base du résultat de comparaison comprend :
Si le niveau réel d'eau est supérieur au niveau de l'eau de chauffage en circulation, et que la différence entre la température réelle de l'eau et la température de l'eau définie par l'utilisateur est supérieure à une différence de température autorisée prédéfinie, alors démarrez la machine de chauffage principale (1), contrôlez la vanne de mélange d'eau (9) pour ne permettre que la conduction de la sortie d'eau du réservoir d'eau de conservation de chaleur (3) avec l'entrée d'eau de la machine de chauffage principale (1), et contrôlez l'élément de vanne pour ne permettre que la conduction de la sortie d'eau de la machine de chauffage principale (1) avec le port de retour d'eau du réservoir d'eau de conservation de chaleur (3).

6. Le procédé de commande selon la revendication 1, dans lequel la machine de chauffage principale (1) est une machine principale de pompe à chaleur, et avant l'étape de commande de la machine de chauffage principale (1), sur la base du résultat de comparaison du robinet de mélange d'eau (9) et de l'élément de valve, le procédé de commande comprend en outre :
acquérir la température d'entrée d'eau de l'entrée d'eau de la machine de chauffage principale (1) ;
calculer la différence réelle de température entre la température de l'eau en sortie et la température de l'eau en entrée ;
comparer la différence de température réelle avec une première différence de température prédéfinie ; et
Si la différence de température réelle est inférieure à la première différence de température, alors contrôler la pompe à chaleur principale pour entrer en mode de dégivrage, contrôler l'élément de valve pour ne permettre que la conduction de la sortie d'eau de la chaudière principale (1) avec le port de retour d'eau du réservoir d'eau sous pression (2), et contrôler la vanne de mélange d'eau (9) pour conduire la sortie d'eau du réservoir d'eau sous pression (2) avec l'entrée d'eau de la chaudière principale (1).

7. Le procédé de commande selon la revendication 6, dans lequel après que la machine principale de la pompe à chaleur est contrôlée pour entrer en mode de dégivrage, lorsque la vanne de mélange d'eau (9) est contrôlée pour connecter la sortie d'eau du réservoir d'eau sous pression (2) à l'entrée d'eau de la machine de chauffage principale (1), le procédé de commande comprend en outre :
comparer la différence de température réelle avec une deuxième différence de température prédéfinie ; et
Si la différence de température réelle est inférieure à la deuxième différence de température, alors réduire le débit de la sortie d'eau du réservoir d'eau sous pression (2) et/ou augmenter le débit de la sortie d'eau du réservoir d'eau de conservation (3) à travers la vanne de mélange d'eau (9), afin que la différence de température réelle soit supérieure ou égale à la deuxième différence de température.

8. Le procédé de commande selon la revendication 1, dans lequel une première pompe à eau (91) est prévue entre la vanne de mélange d'eau (9) et l'entrée d'eau de la machine de chauffage principale (1), et la première pompe à eau (91) est mise en marche au même moment que le contrôle de la vanne de mélange d'eau (9) pour connecter l'entrée d'eau de la machine de chauffage principale (1) à la sortie d'eau du réservoir d'eau sous pression (2) et/ou à la sortie d'eau du réservoir d'eau de conservation de la chaleur (3).

9. Le procédé de commande selon la revendication 1, dans lequel une première vanne d'arrêt (6) est disposée entre la sortie d'eau du réservoir d'eau sous pression (2) et la vanne de mélange d'eau (9), et la première vanne d'arrêt (6) est ouverte au même moment que le contrôle de la vanne de mélange d'eau (9) pour connecter l'entrée d'eau de la machine de chauffage principale (1) avec la sortie d'eau du réservoir d'eau sous pression (2) ; et
Une deuxième vanne d'arrêt (5) est connectée au port de retour d'eau du réservoir d'eau de conservation de chaleur (3), et la deuxième vanne d'arrêt (5) s'ouvre simultanément au moment où le membre de vanne est contrôlé pour connecter la sortie d'eau de la machine de chauffage principale (1) au port de retour d'eau du réservoir d'eau de conservation de chaleur (3).
